# EUROPEAN PATENT SPECIFICATION

(11) **EP 1 147 261 B1**
(45) Date of publication and mention of the grant of the patent: **23.04.2008**
(21) Application number: 99966510.2
(22) Date of filing: 20.12.1999
(51) Int. Cl.: E01F 15/04, E01F 9/018

(54) **Breakaway support post for highway guardrail end treatment.**
Leitplankenpfosten mit Sollbruchstelle für Schienenende.
Montant de support susceptible de se rompre pour équiper les extrémités de glissières de sécurité d'autoroutes.

(30) Priority: 06.01.1999 US 115122 P; 19.07.1999 US 358017
(43) Date of publication of application: 24.10.2001
(73) Proprietor: Trinity Industries, Inc., Dallas, Texas 75202 (US)
(72) Inventor: ALBRITTON, James, R., Aledo, TX 76008 (US)
(74) Representative: Grubert, Andreas
(86) International application number: PCT/US1999/030463
(87) International publication number: WO 2000/040805

(56) References cited:
- WO-A-94/03678
- WO-A-98/50637
- AT-B- 278 890
- DE-A- 1 534 526
- GB-A- 2 023 695
- LU-A- 41 444
- US-A- 4 838 523
- US-A- 5 797 591

## Description

The present invention relates to breakaway support post according to the preamble of claim 1.

The present invention relates to highway guardrail systems having a guardrail mounted on breakaway support posts, and more particularly, to guardrail end treatments designed to meet applicable federal and state safety standards including but not limited to crash worthiness requirements.

### BACKGROUND OF THE INVENTION

Along most highways there are hazards which present substantial danger to drivers and passengers of vehicles if the vehicles leave the highway. To prevent accidents from a vehicle leaving a highway, guardrail systems are often provided along the side of the highway. Experience has shown that guardrails should be installed such that the end of a guardrail facing oncoming traffic does not present another hazard more dangerous than the original hazard requiring installation of the associated guardrail systems. Early guardrail systems often had no protection at the end facing oncoming traffic. Sometimes impacting vehicles became impaled on the end of the guardrail causing extensive damage to the vehicle and severe injury to the driver and/or passengers. In some reported cases, the guardrail penetrated directly into the passenger's compartment of the vehicle fatally injuring the driver and passengers.

Various highway guardrail systems and guardrail end treatments have been developed to minimize the consequences resulting from a head-on impact between a vehicle and the extreme end of the associated guardrail. One example of such end treatments includes tapering the ends of the associated guardrail into the ground to eliminate potential impact with the extreme end of the guardrail. Other types of end treatments include breakaway cable terminals (BCT), vehicle attenuating terminals (VAT), the SENTRE end treatment, and breakaway end terminals (BET).

It is desirable for an end terminal assembly installed at one end of a guardrail facing oncoming traffic to attenuate any head-on impact with the end of the guardrail and to provide an effective anchor to redirect a vehicle back onto the associated roadway after a rail face impact with the guardrail downstream from the end terminal assembly. Examples of such end treatments are shown in U.S. Patent 4,928,928 entitled *Guardrail Extruder Terminal,* and U.S. Patent 5,078,366 entitled *Guardrail Extruder Terminal.*

A SENTRE end treatment often includes a series of breakaway steel guardrail support posts and frangible plastic containers filled with sandbags. An impacting vehicle is decelerated as the guardrail support posts release or shear and the plastic containers and sandbags are compacted. A cable is often included to guide an impacting vehicle away from the associated guardrail.

A head-on collision with a guardrail support post located at the end of a guardrail system may result in vaulting the impacting vehicle. Therefore, guardrail end treatments often include one or more breakaway support posts which will yield or shear upon impact by a vehicle. Examples of previously available breakaway posts are shown in U.S. Patent 4,784,515 entitled *Collapsible Highway Barrier,* and U.S. Patent 4,607,824 entitled *Guardrail End Terminal.* Posts such as shown in the '515 and the '824 Patents include a slip base with a top plate and a bottom plate which are designed to not yield upon lateral impact. When sufficient axial impact force is applied to the upper portion of the associated post, the top plate and the bottom plate will slide relative to each other. If a vehicle contacts the upper part of the post, the associated impact forces tend to produce a bending moment which may reduce or eliminate any slipping of the top plate relative to the bottom plate. Also, improper installation of the top plate relative to the bottom plate, such as over tightening of the associated mechanical fasteners, may prevent proper functioning of the slip base. A breakaway support post is also shown in U.S. Patent 5,503,495 entitled *Thrie-Beam Terminal with Breakaway Post Cable Release.*

Wooden breakaway support posts are frequently used to releasably anchor guardrail end treatments and portions of the associated guardrail. Such wooden breakaway support posts, when properly installed, generally perform satisfactorily to minimize damage to an impacting vehicle during either a rail face impact or a head-on impact. However, impact of a vehicle with a wooden breakaway support post may often result in substantial damage to the adjacent soil. Removing portions of a broken wooden post from the soil is often both time consuming and further damages the soil. Therefore, wooden breakaway support posts are often installed in hollow metal tubes, sometimes referred to as foundation sleeves, and/or concrete foundations. For some applications, one or more soil plates may be attached to each metal sleeve to further improve the breakaway characteristics of the associated wooden post. Such metal sleeves and/or concrete foundations are relatively expensive and time consuming to install.

Light poles, sign posts or similar items are often installed next to a roadway with a breakable or releasable connection. For some applications, a cement foundation may be provided adjacent to the roadway with three or more bolts projecting from the foundation around the circumference of the pole. Various types of frangible or breakable connections may be formed between the bolts and portions of the light pole or sign post.

In WO 98/50637, a breakaway support post is provided for a highway guardrail system. It is composed of an upper and lower portion with a rotatable coupling assembly comprising a pivot pin portion disposed therebetween. A shear pin extending through openings in two U-shaped brackets plays the role of a releasing mechanism to maintain the upper and lower portions respectively attached to the brackets aligned with each other prior to e impact of a vehicle with one end of the associated guardrail.

LU 41 44 which also relates a support post for highway guardrail, shows an example of welding of the plates that are used for a mean for rotatably coupling the upper and lower portion.

Other possible solutions to the problems discussed are found in U.S. Patent Application 09/074,496, filed May 7, 1998, entitled *Breakaway Metal Post for Highway Guardrail End Treatments,* and U.S. Provisional Application 60/046,015 filed May 9, 1997, entitled *A Breakaway Metal Post for Highway Guardrail End Treatments.* These solutions have been adequate for their intended purposes, but are not satisfactory in all respects. For example, previous breakaway support post designs have not included reusable parts. For another example, previous breakaway support post designs have included parts which require extensive machining.

### SLTMMARY OF THE INVENTION

From the foregoing, it may be appreciated that a need has arisen for an apparatus for a breakaway support post for mounting a guardrail thereon as part of a highway guardrail system which is cheaper and more reusable than previous designs. According to one form of the present invention, this need is met by a breakaway support post according to claim 1.

Particular embodiments of the invention are the subject of dependent claims.

### BRIEF DESCRIPTION OF THE DRAWINGS

For a more complete understanding of the present invention, and the advantages thereof, reference is now made to the following written description taken in conjunction with the accompanying drawings, in which:
FIGURE 1 is a schematic drawing showing an isometric view with portions broken away of a highway guardrail system having a breakaway support post with a guardrail mounted thereon in accordance with an embodiment of the present invention;
FIGURE 2 is a schematic drawing with portions broken away showing a side view of the breakaway support post of FIGURE 1 in its upright position;
FIGURE 3 is a schematic drawing with portions broken away showing a rear view of the breakaway support post of FIGURE 1 in its upright position;
FIGURE 4 is a schematic drawing similar to FIGURE 3, but showing the breakaway support post rotating from its upright position to an angled position in response to a force applied to the breakaway support post in one direction corresponding with an impact by a vehicle with one end of the associated guardrail;
FIGURE 5 is a schematic drawing with portions broken away showing a rear view of a further embodiment of the support post of FIGURE 1 in an upright position;
FIGURE 6 is a schematic drawing with portions broken away showing a side view of the embodiment of the breakaway support post FIGURE 5 in the upright position;
FIGURE 7 is a schematic drawing of an exploded view of the breakaway support post in FIGURE 5 showing only an upper portion and a lower portion thereof; and
FIGURE 8 is a schematic drawing with portions broken away showing a rear view of the breakaway support post of FIGURE 5.

### DETAILED DESCRIPTION OF THE INVENTION

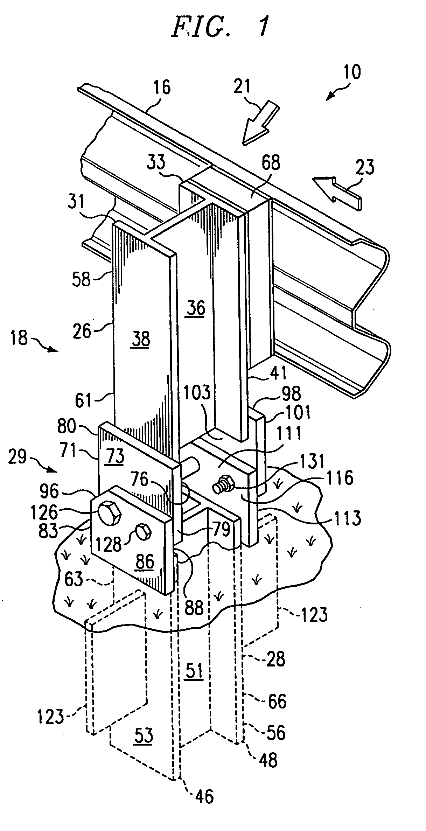

The preferred embodiments of the present invention and its advantages are best understood by referring now in more detail to FIGURES 1-8 of the drawings, in which like numerals refer to like parts.

FIGURE 1 is a schematic drawing showing an isometric view with portions broken away of a highway guardrail system 10 having a breakaway support post 18 with a guardrail 16 mounted thereon in accordance with an embodiment of the present invention. Referring to FIGURE 1, the highway guardrail system 10 is typically installed along the edge of a highway or roadway (not expressly shown) adjacent to a hazard (not expressly shown) to prevent a vehicle (not shown) from leaving the associated highway or roadway.

Guardrail system 10 is primarily designed and installed along a highway to withstand a rail face impact from a vehicle downstream from an associated end treatment. Various types of guardrail end treatments (not expressly shown) are preferably provided at the end of guardrail 16 facing oncoming traffic. Examples of guardrail end treatments satisfactory for use with the present invention are shown in U.S. Patent 4,655,434 entitled *Energy Absorbing Guardrail Terminal;* U.S. Patent 4,928,928 entitled *Guardrail Extruder Terminal;* and U.S. Patent 5,078,366 entitled *Guardrail Extruder Terminal.* Such guardrail end treatments extend substantially parallel with the associated roadway. U.S. Patent 4,678,166 entitled *Eccentric Loader Guardrail Terminal* shows a guardrail end treatment which flares away from the associated roadway. When the type of guardrail end treatment disclosed in U.S. Patents 4,655,434; 4,928,928; 5,078,366; and 4 678,166 is hit by a vehicle, the guardrail will normally release from the associated support post and allow the impacting vehicle to pass behind downstream portions of the associated guardrail. However, breakaway support posts incorporating teachings of the present invention may be used with any guardrail end treatment or guardrail system having satisfactory energy-absorbing characteristics for the associated roadway and anticipated vehicle traffic.

The support post 18 has a strong direction 21 and a weak direction 23. When the post is subjected to an impact from the strong direction 21, the post exhibits a high mechanical strength. The strong direction 21 is oriented perpendicular to the guardrail 16. Thus, when the post is impacted by a vehicle in the strong direction 21 (such as when the vehicle impacts the face of the guardrail), the post will remain intact and standing, and the vehicle will be redirected back onto the road. The weak direction 23 is oriented parallel to the guardrail. When the post is subjected to an impact from the weak direction 23, the post exhibits low mechanical strength. Thus, when the post is impacted by a vehicle in the weak direction 23 (such as when the vehicle impacts the end of the guardrail), the portion of the post that is substantially above the ground will yield, so as to avoid presenting a substantial barrier to the vehicle. Preferably, the upper portion of the post will deflect, in order to minimize lifting of the impacting vehicle into the air.

One or more support posts 18 are preferably incorporated into the respective guardrail end treatment to substantially minimize damage to a vehicle during a head-on impact with the end of guardrail 16 facing oncoming traffic. The number of support posts 18 and the length of guardrail 16 may be varied depending upon the associated roadway, the hazard adjacent to the roadway requiring installation of highway guardrail system 10, anticipated vehicle traffic on the associated roadway, and the selected guardrail end treatment. As discussed later in more detail, breakaway support posts 18 will securely anchor guardrail 16 during a rail face impact or front impact with guardrail 16 to redirect an impacting vehicle back onto the associated roadway. Support posts 18 will yield or buckle during a head-on impact with the end of guardrail 16 without causing excessive damage to an impacting vehicle.

Various techniques which are well known in the art may be satisfactorily used to install the breakaway support post 18, depending upon the type of soil conditions and other factors associated with the roadway and the hazard requiring installation of respective highway guardrail system 10. For many applications, the breakaway support post 18 may be simply driven into the soil using an appropriately sized hydraulic and/or pneumatic driver. As a result, the breakaway support post 18 may be easily removed from the soil using an appropriately sized crane or other type of pulling tool. For many applications, the breakaway post 18 may be satisfactorily used to install guardrail 16 adjacent to an associated roadway without the use of metal foundation tubes or other types of post-to-ground installation systems such as concrete with a steel slip base support. U.S. Patent 5,503,495, entitled *Thrie-Beam Terminal With Breakaway Post Cable Release,* shows one example of a breakaway support post with this type of foundation.

Support posts 18 may be fabricated from various types of steel alloys or other materials with the desired strength and/or breakaway characteristics appropriate for the respective highway guardrail system 10. For some applications, a breakaway support post incorporating teachings of the present invention may be fabricated from ceramic materials or a mixture of ceramic and metal alloys which are sometimes referred to as cermets.

Referring to FIGURE 1, the support post 18 includes an upper portion 26 and a lower portion 28 which are pivotally coupled by a rotatable coupling mechanism 29. Both the upper and lower portions 26 and 28 are steel I-beams. The upper portion 26 includes a flange 31 and a flange 33, with a web 36 extending between them. The flanges 31 and 33 are generally parallel to the guardrail 16. The web 36 is generally perpendicular to the flanges 31 and 33 and the guardrail 16. The flanges 31 and 33 have substantially vertical surfaces 38 and 41, respectively, on the sides thereof opposite the sides to which the web 36 is coupled. The rotatable coupling mechanism 29 includes four metal plates 71, 83, 98, and 111 and three bolts 126, 128, and 131. The mechanism 29 rotatably couples the upper portion 26 to the lower portion 28. In the described embodiment, the upper and lower portions 26 and 28 have the same general I-shaped cross-section. Alternatively, for some applications, the upper portion 26 could have a cross-section which is substantially different from the cross-section of the lower portion 28. For example, the upper portion 26 may be an I-beam, while the lower portion 28 may be a hollow or solid cylindrical post, or a hollow or solid square post, or some other shape.

The lower portion 28 includes a flange 46 and a flange 48, with a web 51 extending between them. The flanges 46 and 48 have substantially vertical surfaces 53 and 56 on the sides thereof opposite to the sides to which the web 51 is coupled. The flanges 46 and 48 are generally parallel to the guardrail 16 and are generally aligned in horizontal directions with the flanges 31 and 33, respectively. The web 51 is generally perpendicular to the flanges 46 and 48, and is generally aligned in horizontal directions with the web 36.

In FIGURE 1, highway guardrail system 10 is shown with a typical deep W-beam twelve (12) gauge type guardrail 16. For some applications, a thrie beam guardrail may be satisfactorily used. Other types of guardrails, both folded and non-folded, may be satisfactorily used with the breakaway support post 18 of the present invention.

The upper portion 26 includes an upper end 58 and a lower end 61. The lower portion 28 includes an upper end 63 and a lower end 66. A block 68 forms a lateral offset between the guardrail 16 and the support post 18. The block 68 is fixedly coupled to the guardrail 16 and the support post 18.

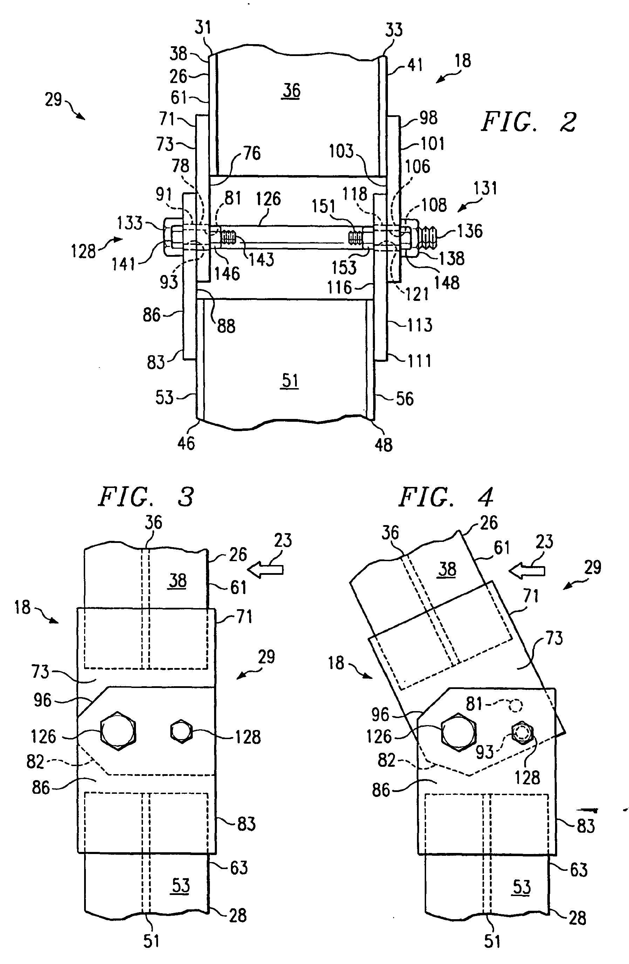

A clearer understanding of the present invention is gained by considering FIGURES 1 and 2 together. FIGURE 2 is a schematic drawing with portions broken away showing a side view of the breakaway support post 18 of FIGURE 1 in its upright position.

Referring to FIGURES 1 and 2, the flat metal plate 71 has sides which are substantially vertical surfaces 73 and 76 and is of a generally rectangular shape. The plate 71 includes two horizontally spaced cylindrical openings 78 and 81 therethrough (shown in FIGURE 2). The plate 71 further includes a first edge 79 and a second edge 80, the first edge 79 facing generally toward the direction of an expected impact in the weak direction 23, the second edge 80 facing generally away from the direction of the expected impact in the weak direction 23. The plate 71 further includes a chamfer 82 (shown in FIGURES 3-4) disposed between a bottom edge and a lower portion of the second edge 80 of the plate 71. In the disclosed embodiment, the chamfer extends at an angle of 45° with respect to each of the bottom edge and the second edge 80 of plate 71. The plate 71 is disposed against the substantially vertical surface 38 of the lower end 61 and is fixedly secured to the lower end 61 by a weld (not illustrated). The plate 71 is disposed against the lower end 61 such that a portion of the substantially verticai surface 76 overlaps a portion of the substantially vertical surface 38. The extent of the overlap between the plate 71 and the lower end 61 may be seen in greater detail in FIGURE 2.

As mentioned above, the coupling mechanism 29 includes three additional plates 83, 98, and 111. These three additional plates are each substantially identical to plate 71, but are each described below for purposes of completeness. The flat metal plate 83 has a generally rectangular shape and has sides which are substantially vertical surfaces 86 and 88. The plate 83 includes two horizontally spaced cylindrical openings 91 and 93 therethrough (shown in FIGURE 2). The plate 83 further includes a first edge and a second edge, the first edge facing generally toward the direction of an expected impact in the weak direction 23, the second edge facing generally away from the direction of the expected impact in the weak direction 23. The plate 83 further includes a chamfer 96 (also shown in FIGURES 3-4) disposed between a top edge and an upper portion of the second edge of the plate 83. The plate 83 is disposed against the upper end 63 and is fixedly secured to the upper end 63 by a weld (not-illustrated). The upper end of plate 83 is disposed adjacent and overlaps the lower end of plate 71 so that the cylindrical openings 78 and 91 are aligned, and the cylindrical openings 81 and 93 are aligned. A portion of the substantially vertical surface 88 remote from plate 71 is disposed adjacent to a portion of the substantially vertical surface 53.

The flat metal plate 98 is of a generally rectangular shape and has sides forming substantially vertical surfaces 101 and 103. The plate 98 includes two horizontally spaced cylindrical openings 106 and 108 therethrough (shown in FIGURE 2). The plate 98 further includes a first edge and a second edge, the first edge facing generally toward the direction of an expected impact in the weak direction 23, and the second edge facing generally away from the direction of the expected impact in the weak direction 23. The plate 98 further includes a chamfer (not shown) disposed between a bottom edge and a lower portion of the second edge of the plate 98. The plate 98 is disposed against the lower end 61 and is fixedly secured to the lower end 61 by a weld (not-illustrated). A portion of the substantially vertical surface 103 is disposed against and overlaps a portion of the substantially vertical surface 41.

The flat metal plate 111 is of a generally rectangular shape and has sides that form substantially vertical surfaces 113 and 116. The plate 111 includes two horizontally spaced cylindrical openings 118 and 121 therethrough (shown in FIGURE 2). The plate 111 further includes a first edge and a second edge, the first edge facing generally toward the direction of an expected impact in the weak direction 23, the second edge facing generally away from the direction of the expected impact in the weak direction 23. The plate 111 further includes a chamfer (not shown) disposed between a top edge and an upper portion of the second edge of the plate 111. The plate 111 is disposed against the upper end 63 and is fixedly secured to the upper end 63 by weld (not shown). A portion of the substantially vertical surface 116 is disposed against and overlaps a portion of the substantially vertical surface 56. The plates 98 and 111 are disposed adjacent and overlap each other so that the openings 106 and 118 are aligned, and the openings 108 and 121 are aligned.

The openings 78, 91, 106, and 118 are coaxial and are disposed closer to the second edges than to the first edges of the plates 71, 83, 98, and 111, respectively. The openings 81, 93, 108, and 121 are coaxial and are disposed closer to the first edges than to the second edges of the plates 71, 83, 98, and 111, respectively.

Referring to FIGURE 2, a pivot bolt 126 extends through the aligned cylindrical openings 78, 91, 106, and 118 in the plates 71, 83, 98, and 111. The pivot bolt 126 rotatably couples the plate 83 to the plate 71, and the plate 98 to the plate 111. A shear bolt 128 extends through the cylindrical openings 81 and 93 in the plates 71 and 83. A further shear bolt 131 extends through the cylindrical openings 108 and 121 in the plates 98 and 111. The shear bolts 128 and 131 are generally vertically aligned with and are generally parallel to the pivot bolt 126. The shear bolt 128 releasably secures the plates 71 and 83 against relative rotational movement. The shear bolt 131 releasably secures the plates 98 and 111 against relative rotational movement. The shear bolts 128 and 131 each have a diameter smaller than the diameter of the pivot bolt 126.

The pivot bolt 126 has a head 133 and threads 136. A nut 138 engages the threads 136 to secure the pivot bolt 126 against axial movement within the openings 78, 91, 106, and 118. The head 133 is disposed against the substantially vertical surface 86 on the plate 83. The nut 138 is disposed against the substantially vertical surface 101 on the plate 98. The shear bolt 128 has a head 141 and threads 143. A nut 146 engages the threads 143 to secure the shear bolt 128 against axial movement within the openings 81 and 93. The head 141 is disposed against the substantially vertical surface 86 on the plate 83. The nut 146 is disposed against the substantially vertical surface 76 on the plate 71. The shear bolt 131 has a head 148 and threads 151. A nut 153 engages the threads 151 to secure the shear bolt 131 against axial movement within the openings 108 and 121. The head 148 is disposed against the substantially vertical surface 101 of the plate 98. The nut 153 is disposed against the substantially vertical surface 116 of the plate 111.

Depending on the length of the lower end 66 and the type of soil conditions, a plurality of soil plates 123 may be attached to the lower end 66 so as to extend outwardly from the flanges 46 and 48. As a result of increasing the length of the lower end 66, the use of the soil plates 123 may not be required.

FIGURE 3 is a schematic drawing with portions broken away showing a rear view of the breakaway support post 18 of FIGURE 1 in its upright position. FIGURE 4 is a schematic drawing similar to FIGURE 3, showing the breakaway support post 18 rotating from the upright position to the angled position in response to a force applied in the weak direction 23. In the upright position, the post 18 is upright with the upper portion 26 generally rectilinearly aligned with the lower portion 28. In the angled position, the upper portion 26 has rotated due to an impact from the weak direction 23 and forms an angle with respect to the lower portion 28.

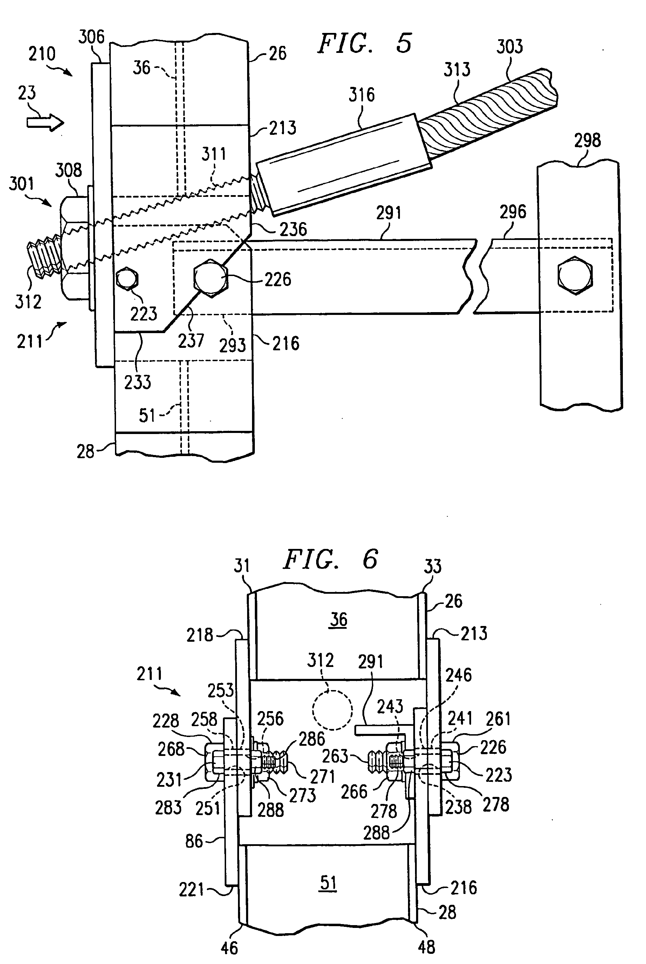

An alternative embodiment 210 of the breakaway support post 18 of FIGURE 1 is shown in FIGURES 5, 6 and 7. Only the differences between these posts are described in detail below.

Referring to FIGURES 5 and 6, a releasable coupling assembly 211 rotatably couples the upper and lower portions 26 and 28 of the post, and includes four metal plates 213, 216, 218, and 221, and four bolts 223, 226, 228, and 231.

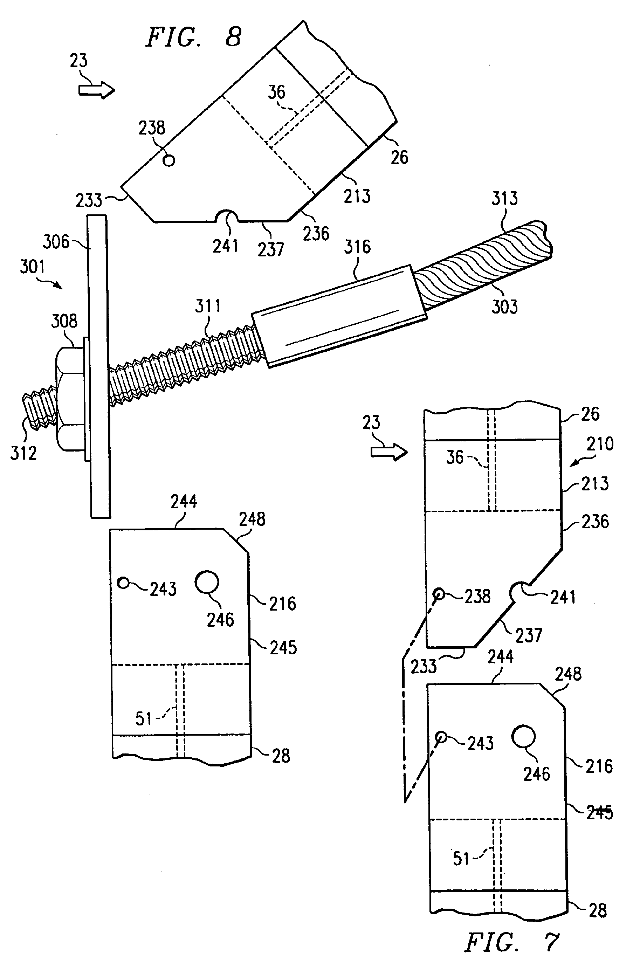

Referring to FIGURES 5, 6, and 7, the flat metal plate 213 includes a bottom edge 233 and a side edge 236, the side edge facing generally away from the direction of an expected impact in the weak direction 23. An inclined edge 237 faces downwardly and away from the direction of the expected impact in the weak direction 23, and in particular extends at an angle of 45° with respect to each of the bottom edge 233 and the side edge 236, and thus at an angle of 45° with respect to a vertical reference when the upper portion 26 is in the upright position. The plate 213 further includes a cylindrical opening 238 therethrough and a semicylindrical recess 241 disposed in the inclined edge 237 (FIGURE 7). The plate 213 is disposed against the upper portion 26 such that a portion of the plate 213 overlaps a portion of the upper portion 26 and is fixedly secured to the upper portion 26 by a weld (not illustrated). The extent of the overlap between the plate 213 and the lower portion 26 may be seen in greater detail in FIGURE 6.

The flat metal plate 216 has a generally rectangular shape. Plate 216 includes two horizontally spaced cylindrical openings 243 and 246 therethrough (FIGURE 7). The plate 216 further includes a top edge 244 and a side edge 245, the side edge 245 facing generally away from the direction of the expected impact in the weak direction 23. The plate 216 further includes a chamfer 248 disposed between the top edge 244 and the side edge 255. The chamfer 248 extends at an angle of 45 degrees with respect to the top and side edges 244 and 245. The plate 216 is disposed against the lower portion 28 such that a portion of the plate 216 overlaps a portion of the lower portion 28 and is fixedly secured to the lower portion 28 by a weld (not illustrated). An upper end of plate 216 is disposed adjacent and overlaps the lower end of plate 213 (FIGURE 6) so that the cylindrical openings 238 and 243 are aligned, and the recess 241 and the cylindrical opening 246 are aligned. The extent of the overlap between the plate 216 and the lower portion 28 may be seen in greater detail in association with FIGURE 6.

The coupling assembly 211 includes two additional plates 218 and 221 as shown in FIGURE 6. Plate 218 is substantially similar to plate 213, and plate 221 is substantially similar to plate 216.

More specifically, the plate 218 includes a cylindrical opening 251 similar to the cylindrical opening 238 and a semicylindrical recess 253 similar to the recess 241. The plate 221 includes two horizontally spaced cylindrical openings 256 and 258 similar to the cylindrical openings 243 and 246, respectively. Referring to FIGURE 6, the openings 238 and 243 are coaxial, the openings 251 and 256 are coaxial, and the recess 241 and the opening 246 are coaxial. The opening 246, opening 258, recess 241, and recess 253 are each spaced horizontally in the direction 23 from openings 243, 256, 238, and 251, respectively.

Referring to FIGURES 5 and 6, a rigid strut 291 is generally L-shaped in cross-section and includes near one end a cylindrical opening therethrough (not shown). The strut 291 has a first end 293 disposed adjacent the plate 216 and coupled thereto by the pivot bolt 226 which extends through the cylindrical opening in the strut 291. The strut 291 further has a second end 296, opposite from the first end 293, coupled to a further support post 298.

The pivot bolt 226 extends through the cylindrical opening 246 and is engageable with the recess 241. The other pivot bolt 228 extends through the cylindrical opening 246, the opening in the strut 291, and is engageable with the recess 253. The pivot bolts 226 and 228 are also coaxial with each other.

The shear bolt 223 extends through the cylindrical openings 238 and 243. The other shear bolt 231, similar to shear bolt 226, extends through the cylindrical openings 243 and 253. The shear bolts 223 and 231 are generally vertically aligned with and parallel to the pivot bolts 226 and 228. The shear bolt 223 releasably secures the plates 213 and 216 against relative pivotal movement in one direction, and the shear bolt 231 releasably secures the plates 218 and 221 against relative pivotal movement in one direction. The shear bolts 223 and 231 each have a diameter smaller than the diameter of the pivot bolts 226 and 228.

The pivot bolt 226 has a head 261 and threads 263. A nut 266 engages the threads 263 to secure the pivot bolt 226 against axial movement relative with respect to plates 213 and 216, and strut 291. The nut 266 further secures the strut 291 against relative movement to the post 210. Similar to pivot bolt 226, the pivot bolt 228 has a head 268 and threads 271. A nut 273 engages the threads 271 to secure the pivot bolt 228 against axial movement relative to plates 218 and 221. The shear bolt 223 has a head 276 and threads 278. A nut 281 engages the threads 278 to secure the shear bolt 223 against axial movement within the openings 238 and 243. Similar to shear bolt 223, shear bolt 231 includes a head 283 and threads 286. A nut 288 engages the threads 286 to secure the shear bolt 231 against axial movement within the openings 251 and 256.

FIGURE 8 is a schematic drawing with portions broken away showing a rear view of the breakaway support post 210 of FIGURE 5 following a release of the coupling assembly 211. Referring to FIGURES 5 and 8, a cable 303 and a releasable cable coupling mechanism 301 are shown. The releasable coupling mechanism 301 includes an anchor plate 306 and a nut 308. The cable may be any of a variety of industry standard metal cables.

The anchor plate 306 is a flat metal plate of a generally rectangular shape. The anchor plate 306 has an aperture therethrough (not shown). As shown in FIGURE 5, the anchor plate 306 is normally disposed against the lower end of the upper portion 26. The anchor plate 306 may also overlap the lower portion 28 or be in some other appropriate location with respect to the support post 210.

The cable 303 has a first end portion 311 and a second end portion (not shown) at a remote end. The second end portion is coupled to the highway guardrail system 10 at a location remote from the first end portion. In this embodiment, the first end portion 311 includes a threaded stud 312. The cable further includes a flexible portion 313 and a mating part 316. The mating part 316 couples the flexible portion 313 to the threaded stud 312. The first end portion 311 extends through the aperture of the anchor plate 306 and further extends away from the anchor plate 306 between the upper and lower portions 26 and 28. The cable 303 engages the web 36, but could alternatively engage the web 51, or further extend in some other appropriate manner away from the anchor plate 306. The first end portion of the cable 311 is fixedly secured against withdrawal from the opening in the anchor plate 306 by the nut 308 which engages the threaded stud 312.

The breakaway support post 18 of FIGURES 1-4 operates as follows. In the upright position of the upper portion 26 (FIGURE 3), the upper and lower portions 26 and 28 are generally parallel. The coupling mechanism 29 prevents the upper portion 26 from rotating relative to the lower portion 28 around the pivot bolt 126. When a vehicle impacts the guardrail system 10 with sufficient force from the weak direction 23, the shear bolt 128 will be sheared by scissors-like interaction of the plates 71 and 83, and the shear bolt 131 will be sheared by scissors-like interaction of the plates 98 and 111. The pivot bolt 126 does not fail during the impact because the pivot bolt 126 has a diameter large enough to avoid failure, and in particular has a larger diameter than the diameter of the shear bolts 128 and 131. Once the shear bolts fail, the upper portion 26 will rotate away from the impacting vehicle about the pivot bolt 126. The openings 81 and 93 (shown in FIGURE 4) and the openings 108 and 121 (not shown in FIGURE 4) move out of alignment as the upper portion 26 rotates. Chamfers 82 and 96 allow the upper portion 26 to rotate while avoiding engagement of the plates 71, 83, 98, and 111 with the webs 36 and 51 and the flanges 31, 33, 46, and 48. The rotation of the upper portion 26 will collapse the guardrail 16 and protect the occupants of the impacting vehicle from being impaled on the guardrail 16.

The further embodiment of the breakaway support post shown as 210 in FIGURES 5-8 operates as follows. In the upright position (shown in FIGURE 5), the upper and lower portions 26 and 28 are generally parallel. As shown in FIGURE 5, the anchor plate 306 is disposed against the upper portion 26 when the upper portion 26 is in the upright position, and the cable 303 is maintained under tension. The anchor plate 306 operates to secure the cable 303 against relative movement with respect to the support post 210.

The releasable coupling assembly 211 allows the upper portion 26 to separate from the lower portion 28 in response to a force in the weak direction 23. When a vehicle impacts the breakaway support post 210 with sufficient force in the weak direction 23, the shear bolt 223 will be sheared by scissors-like interaction of the plates 213 and 216, and the shear bolt 231 will be sheared by scissors-like interaction of the plates 218 and 221. The pivot bolts 226 and 228 do not fail during the impact because the pivot bolts 226 and 228 have a diameter large enough to avoid failure, and, in particular, have a diameter larger than the diameter of the shear bolts 223 and 231. Once the shear bolts 223 and 231 have failed the upper portion 26 will typically pivot a small amount about the pivot bolts 226 and 228, and then physically separate from the lower portion 28 (FIGURE 8).

As shown in FIGURE 8, as the upper portion 26 physically separates from the lower portion 28 the anchor plate 306 is no longer secured by the upper portion 26. Thus, the anchor plate 306 is able to move away from the anchor plate's initial position. Thus, once the anchor plate 306 is released from the upper portion 26 the cable 303 is also free to move while remaining coupled to the anchor plate.

The present invention provides a number of technical advantages. One such technical advantage is the capability of the support post to yield in response to the impact of a vehicle at the end of a guardrail. Yielding in response to the impact by the vehicle results in a decreased chance of injury to occupants of the vehicle. Another advantage is that the flat metal plates can be fabricated rapidly and inexpensively. A further advantage is that the plates are welded onto standard I-beams, which allows the support post to be made easily and cheaply. Moreover, the pivot and shear bolts may be commercially available components, which also reduces the overall cost of manufacturing the post. Further cost savings are realized by reusing the upper and lower portions after an impact, by replacing only the shear bolts. If the upper portion is damaged by an impact, only the upper portion and the shear bolts need to be replaced, and cost savings are realized by reusing the lower portion. When a cable is present, a simple and inexpensive retaining arrangement is provided to retain an end of the cable until an impact occurs, and to then release the end of the cable so that it can move freely. Further, a simple and inexpensive arrangement is provided which permits an upper portion of a post to separate from a lower portion following an impact.

Although one embodiment has been illustrated and described in detail, it should be understood that various changes, substitutions, and alterations can be made therein without departing from the scope of the present invention as defined in the appended claims. For example, although the disclosed support post is an I-beam, a square support post with a hollow center could be used instead. Other changes, substitutions, and alternations are also possible without departing from the scope of the present invention, as defined by the following claims.

## Claims

1. A breakaway support post (18, 210) for mounting a guardrail (16) thereon as part of a highway guardrail system (10), comprising:
an elongated body having an upper portion (26) including a first upper end (58) and a first lower end (61), and a lower portion (28) including a second upper end (63) and a second lower end (66), the second lower end (66) having a configuration for installation adjacent to a roadway, and the first lower end having a first substantially vertical surface (38) thereon and the second upper end (63) having a second substantially vertical surface (53) thereon;
a first means (68) for attaching a guardrail (16) to the elongated body adjacent to the first upper end (58);
a second means (29) for rotatably coupling the upper and the lower portions (26, 28) and for releasably securing the upper portion of the elongated body generally aligned with the lower portion of the elongated body by means of a pivot pin portion (126, 226) and a shear pin having a shear pin portion (128, 223), wherein the breakaway support post (18, 210) resists a rail face impact with the guardrail and wherein an impact with one end of the highway guardrail system (10) will tend to rotate the upper portion (26) of the elongated body relative to the lower portion (28) of the elongated body;
wherein
the second means (29, 211) includes:
a first plate (71, 218) having a first opening or recess (78, 253) and a second opening (81, 256) therethrough, and a third substantially vertical surface (73) thereon, a portion of the third substantially vertical surface (73) being disposed against a portion of the first substantially vertical surface (38), and the first plate (71, 218) being secured to the first lower end (61) by a weld;
a second plate (83, 221) having a third opening (91, 258) and a fourth opening (93, 252) therethrough, and a fourth substantially vertical surface (86) thereon, a portion of the fourth substantially vertical surface (86) being disposed against a portion of the second substantially vertical surface (53), the second plate (83) being secured to the second upper end (63) by a weld, the second plate (83) being disposed adjacent to the first plate (71) so that the first opening (78) is aligned with the third opening (91), and the second opening (81) is aligned with the fourth opening (93);
wherein the pivot pin portion (126, 226) extends through the first and the third openings (78, 253; 91, 258), the upper portion (26) of the elongated body being rotatable about the pivot pin portion relative to the lower portion (28) of the elongated body;
wherein the shear pin portion (128, 223) extends through the second and the fourth openings (81, 256; 93, 252), the shear pin portion being adapted to shear in response to a force to allow pivotal movement of the upper portion (26) relative to the lower portion (28) around the pivot pin portion (126, 226), the pivot pin portion and the shear pin portion extending in a strong direction approximately perpendicular to the plates, wherein the support post exhibits a high mechanical strength in the strong direction, there being a weak direction generally perpendicular to the strong direction, wherein the support post exhibits a low mechanical strength in the weak direction; and
the first and second plates (71, 218; 83, 221) each has a first edge (79) and a second edge (80), the first edge (79) facing generally toward the direction of an expected impact in the weak direction, and the second edge (80) facing generally an opposite direction than the first edge (79), wherein the first plate (71) further includes a first chamfer (82, 237) disposed between a bottom edge thereof and a lower portion of the second edge (80) thereof, and wherein the second plate (83) further includes a second chamfer (96) disposed between a top edge thereof and an upper portion of the second edge thereof, the chamfers (96, 82).

2. The breakaway support post (18, 210) according to claim 1 further comprising:
a fifth substantially vertical surface (41) on a side of the upper portion (26) opposite the side having the first substantially vertical surface (38);
a sixth substantially vertical surface (56) on a side of the lower portion (28) opposite the side having the second substantially vertical surface (53);
a third plate (98) having a fifth opening or recess (106) and a sixth openings (108) therethrough, and a seventh substantially vertical surface (101) thereon, a portion of the seventh substantially vertical surface (101) being disposed against the fifth substantially vertical surface (41), and the third plate (98) being secured to the first lower end (61) by a weld;
a fourth plate (111) having seventh and eighth openings (118, 121) therethrough, and an eighth substantially vertical surface (113) thereon, a portion of the eighth substantially vertical surface (113) being disposed against the sixth substantially vertical surface (56), the fourth plate (111) being secured to the second upper end (63) by a weld, the fourth plate (111) being disposed against the third plate (98), so that the fifth opening (106) is aligned with the seventh opening (118) and the sixth opening (108) is aligned with the eighth opening (121), and a further pivot pin portion (126) extending through the fifth and seventh openings (106, 118) in the strong direction;
a further shear pin portion (131) extending through the sixth and the eighth openings (108, 121) in the strong direction, the further shear pin portion being adapted to shear in response to a force to allow pivotal movement of the upper portion (26) relative to the lower portion (28) around the pivot pin portion (126); and
the third and fourth plates (98, 111) each has a first edge (79) and a second edge (80), the first edge facing generally toward the weak direction, and the second edge facing generally away from the weak direction, wherein the third plate (98) further includes a third chamfer disposed between a bottom edge thereof and a lower portion of the second edge thereof, and wherein the fourth plate (111) further includes a fourth chamfer disposed between a top edge thereof and an upper portion of the second edge thereof.

3. The breakaway support post (210) according to claim 1 or 2, wherein the first or third chamfer (237) is arranged such that it cuts through the first or fifth opening or recess (253) to be shaped semicylindrical.

4. The breakaway support post according to one of the preceding claims, wherein the means (211) for rotatably coupling the upper and the lower portions comprises a block (68) disposed between the guardrail and the upper portion of the elongated body, wherein the block coupled to the first upper end to form a lateral offset between the guardrail and the support post.

5. The breakaway support post according to one of the preceding claims, wherein the upper and lower portions (26, 28) of the at least one support post further comprise a respective I-beam having a web with the web (36) of the I-beam of the upper portion being generally aligned with the web (57) of the I-beam of the lower portion, the webs extending generally perpendicular to the guardrail, and the I-beams each having a pair of flanges (33, 48, 31, 46) attached to opposite sides of the respective web with one flange of the upper portion having the first substantially vertical surface disposed thereon and one flange of the lower portion having the second substantially vertical surface disposed thereon.

6. The breakaway support post according to claim 2, wherein the first, second, third, and fourth plates (213, 216, 98, 111) each comprise:
a flat plate having an inner side and an outer side, the inner sides of the first, second, third, and fourth plates, respectively, include the third, fourth, seventh, and eighth substantially vertical surfaces, respectively, and the outer side of the first plate having a portion disposed adjacent to a portion of the inner side of the second plate; and
a portion of the inner side of the third plate disposed adjacent to a portion of the outer side of the fourth plate.

7. The breakaway support post according to claim 6, wherein:
the first shear pin extending through first and second plates and the second shear pin extending through the third and fourth plates, the first and second shear pins aligned generally coaxial with each other and extending in the strong direction, and each shear pin having a portion which serves as the respective first and second shear pin portions.

8. The breakaway support post according to claim 7, wherein the first and second shear pins each comprise:
a shear bolt having a head at one end and threads (278) at an opposite end;
a respective nut (288) engaged with the threads of each shear bolt; and
each shear bolt having a diameter smaller than a diameter of the respective pivot pin portions.

9. A guardrail system comprising at least one breakaway support post according to one of the preceding claims.

## Patentansprüche

1. Losbrechhalterungspfosten (18, 210) zur Befestigen einer Leitplanke (16) auf diesem als Teil einer Schnellstrassenleitplankenanordnung (10), umfassend:
einen länglichen Körper, der einen oberen Teilbereich (26) einschließlich eines ersten oberen Endes (58) und eines ersten unteren Endes (61) aufweist, und einen unteren Teilbereich (28) einschließlich eines zweiten oberen Endes (63) und eines zweiten unteren Endes (66), wobei das zweite untere Ende (66) eine Anordnung zur Installation benachbart zu einer Fahrbahn aufweist und das erste untere Ende eine erste im Wesentlichen vertikale Oberfläche (38) auf diesem aufweist und das zweite obere Ende (63) eine zweite im Wesentlichen vertikale Oberfläche (53) auf diesem aufweist;
ein erstes Mittel (68) zum Anbringen einer Leitplanke (16) an dem ersten oberen Ende (58) benachbarten länglichen Körper;
ein zweites Mittel (29) zur drehbaren Kopplung der oberen und der unteren Teilbereiche (26, 28) und zur lösbaren Befestigung des oberen Teilbereichs des länglichen Körpers im Allgemeinen ausgerichtet mit dem unteren Teilbereich des länglichen Körpers mittels eines Gelenkbolzenteilbereichs (126, 226) und eines Abscherbolzens, der einen Abscherbolzenteilbereich (128, 223) aufweist, wobei der Losbrechhalterungspfosten (18, 210) einem Schienenstirnflächenaufprall mit der Leitplanke widersteht und wobei ein Aufprall auf ein Ende der Schnellstrassenleitplankenanordnung (10) dazu tendiert, den oberen Teilbereich (26) des länglichen Körpers relativ zu dem unteren Teilbereich (28) des länglichen Körpers zu drehen;
wobei
das zweite Mittel (29, 211) umfasst:
eine erste Platte (71, 218), die eine erste Öffnung oder Aussparung (78, 253) und eine zweite Öffnung (81, 256) dort hindurch aufweist und eine dritte im Wesentlichen vertikale Oberfläche (73) auf dieser, wobei ein Teilbereich der dritten im Wesentlichen vertikalen Oberfläche (73) gegen einen Teilbereich der ersten im Wesentlichen vertikalen Oberfläche (38) angeordnet ist, und die erste Platte (71, 218) durch eine Schweißnaht an dem ersten unteren Ende (61) befestigt ist;
eine zweite Platte (83, 221), die eine dritte Öffnung (91, 258) und eine vierte Öffnung (93, 252) dort hindurch aufweist und eine vierte im Wesentlichen vertikale Oberfläche (86) auf dieser, wobei ein Teilbereich der vierten im Wesentlichen vertikalen Oberfläche (86) gegen einen Teilbereich der zweiten im Wesentlichen vertikalen Oberfläche (53) angeordnet ist, und die zweite Platte (83) durch eine Schweißnaht an dem zweiten obere Ende (63) befestigt ist, die zweite Platte (83) benachbart zu der ersten Platte (71) angeordnet ist, so dass die erste Öffnung (78) mit der dritten Öffnung (91) ausgerichtet ist und die zweite Öffnung (81) mit der vierten Öffnung (93) ausgerichtet ist;
wobei sich der Gelenkbolzenteilbereich (126, 226) durch die ersten und die dritten Öffnungen (78, 253; 91, 258) erstreckt, der obere Teilbereich (26) des länglichen Körpers über den Gelenkbolzenteilbereich relativ zu dem unteren Teilbereich (28) des länglichen Körpers drehbar ist;
wobei sich der Abscherbolzenteilbereich (128, 223) durch die zweiten und die vierten Öffnungen (81, 256; 93, 252) erstreckt, der Abscherbolzenteilbereich angepasst ist abzuscheren als Reaktion auf eine Kraft, um eine Drehbewegung des oberen Teilbereichs (26) relativ zu dem unteren Teilbereich (28) um den Gelenkbolzenteilbereich (126, 226) herum zu ermöglichen, der Gelenkbolzenteilbereich und der Abscherbolzenteilbereich sich in eine stabile Richtung ungefähr senkrecht zu den Platten erstrecken, wobei der Halterungspfosten eine hohe mechanische Beanspruchbarkeit in der stabilen Richtung aufweist, wobei es eine schwache Richtung im Allgemeinen senkrecht zu der stabilen Richtung gibt, wobei der Halterungspfosten eine geringe mechanische Beanspruchbarkeit in der schwachen Richtung zeigt; und die ersten und zweiten Platten (71, 218; 83, 221) jede eine erste Kante (79) und eine zweite Kante (80) aufweisen, die erste Kante (79) im Allgemeinen in die Richtung eines erwarteten Aufpralls in der schwachen Richtung zeigt und die zweite Kante (80) im Allgemeinen in eine entgegen gesetzte Richtung wie die erste Kante (79) zeigt, wobei die erste Kante (11) weiterhin eine zwischen einer unteren Kante davon und einem unteren Teilbereich der zweiten Kante (80) davon angeordnete erste Abschrägung (82, 237) umfasst, und wobei die zweite Platte (83) weiterhin eine zwischen einer oberen Kante davon und einem oberen Teilbereich der zweiten Kante davon angeordnete zweite Abschrägung (96) umfasst, die Abschrägungen (96, 82).

2. Losbrechhalterungspfosten (18, 210) nach Anspruch 1, weiterhin umfassend:
eine fünfte im Wesentlichen vertikale Oberfläche (41) auf einer Seite des oberen Teilbereichs (26) gegenüber der Seite, die die erste im Wesentlichen vertikale Oberfläche (38) aufweist;
eine sechste im Wesentlichen vertikale Oberfläche (56) auf einer Seite des unteren Teilbereichs (28) gegenüber der Seite, die die zweite im Wesentlichen vertikale Oberfläche (53) aufweist;
eine dritte Platte (98), die eine fünfte Öffnung oder Aussparung (106) und eine sechste Öffnung (108) dort hindurch aufweist, und eine siebte im Wesentlichen vertikale Oberfläche (101) auf dieser, wobei ein Teilbereich der siebten im Wesentlichen vertikalen Oberfläche (101) gegen die fünfte im Wesentlichen vertikale Oberfläche (41) angeordnet ist, und die dritte Platte (98) an dem ersten unteren Ende (61) durch eine Schweißnaht befestigt ist;
eine vierte Platte (111), die siebte und achte Öffnungen (118, 121) dort hindurch aufweist, und eine achte im Wesentlichen vertikale Oberfläche (113) auf dieser, wobei ein Teilbereich der achten im Wesentlichen vertikalen Oberfläche (113) gegen die sechste im Wesentlichen vertikale Oberfläche (56) angeordnet ist, die vierte Platte (111) an dem zweiten oberen Ende (63) durch eine Schweißnaht befestigt ist, die vierte Platte (111) gegen die dritte Platte (98) angeordnet ist, so dass die fünfte Öffnung (106) mit der siebten Öffnung (118) ausgerichtet ist und die sechste Öffnung (108) mit der achten Öffnung (121) ausgerichtet ist, und einen weiteren Gelenkbolzenteilbereich (126), der sich in der stabilen Richtung durch die fünften und siebten Öffnungen (106, 118) erstreckt;
einen weiteren Abscherbolzenteilbereich (131), der sich in der stabilen Richtung durch die sechsten und die achten Öffnungen (108, 121) erstreckt, wobei der weitere Abscherbolzenteilbereich angepasst ist um abzuscheren als Reaktion auf eine Kraft, um eine Drehbewegung des oberen Teilbereichs (26) relativ zu dem unteren Teilbereich (28) um den Gelenkbolzenteilbereich (126) herum zu ermöglichen; und
die dritten und vierten Platten (98, 111) jede eine erste Kante (79) und eine zweite Kante (80) aufweisen, wobei die erste Kante im Allgemeinen in Richtung der schwachen Richtung zeigt, und die zweite Kante im Allgemeinen von der schwachen Richtung wegzeigt, wobei die dritte Platte (98) weiterhin eine zwischen einer unteren Kante davon und einem unteren Teilbereich der zweiten Kante davon angeordnete dritte Abschrägung umfasst, und wobei die vierte Platte (111) weiterhin eine vierte zwischen einer obersten Kante davon und einem oberen Teilbereich der zweiten Kante davon angeordnete Abschrägung umfasst.

3. Losbrechhalterungspfosten (210) nach Anspruch 1 oder 2, wobei die erste oder die dritte Abschrägung (237) so angeordnet ist, dass sie durch die erste oder fünfte Öffnung oder Aussparung (253) schneidet, um eine semizylindrische Form aufzuweisen.

4. Losbrechhalterungspfosten entsprechend einem der vorangegangenen Ansprüche, wobei das Mittel (211) zur drehbaren Kopplung der oberen und der unteren Teilbereiche einen zwischen der Leitplanke und dem oberen Teilbereich des länglichen Körpers angeordneten Block (68) umfasst, wobei der Block an das erste obere Ende gekoppelt ist, um einen lateralen Versatz zwischen der Leitplanke und dem Halterungspfosten auszuformen.

5. Losbrechhalterungspfosten entsprechend einem der vorangegangenen Ansprüche, wobei die oberen und unteren Teilbereiche (26, 28) des mindestens einen Halterungspfostens weiterhin einen entsprechenden I-Träger umfassen, der ein Netz aufweist, wobei das Netz (36) des I-Trägers des oberen Teilbereichs im Allgemeinen mit dem Netz (57) des I-Trägers des unteren Teilbereichs ausgerichtet ist, sich die Netze im Allgemeinen senkrecht zu der Leitplanke erstrecken, und die I-Träger jeder ein Paar von an den gegenüber liegenden Seiten des entsprechenden Netzes befestigten Flanschen (33, 48, 31, 46) aufweisen, wobei ein Flansch des oberen Teilbereichs die erste im Wesentlichen vertikale Oberfläche auf diesem angeordnet aufweist und ein Flansch des unteren Teilbereichs die zweite im Wesentlichen vertikale Oberfläche auf diesem angeordnet aufweist.

6. Losbrechhalterungspfosten nach Anspruch 2, wobei die ersten, zweiten, dritten und vierten Platten (213, 216, 98, 111) jede umfassen:
eine flache Platte, die eine innere Seite und eine äußere Seite aufweist, wobei die inneren Seiten der ersten, zweiten, dritten beziehungsweise vierten Platten die dritten, vierten, siebten beziehungsweise achten im Wesentlichen vertikalen Oberflächen umfassen, und die äußere Seite der ersten Platte einen benachbart zu einem Teilbereich der inneren Seite der zweiten Platte angeordneten Teilbereich aufweist; und
einen Teilbereich der inneren Seite der dritten Platte benachbart zu einem Teilbereich der äußeren Seite der vierten Platte angeordnet ist.

7. Losbrechhalterungspfosten nach Anspruch 6, wobei:
sich der erste Abscherbolzen durch erste und zweite Platten erstreckt, und sich der zweite Abscherbolzen durch dritte und vierte Platten erstreckt, wobei die ersten und zweiten Abscherbolzen im Allgemeinen koaxial mit einander ausgerichtet sind und sich in die stabile Richtung erstrecken, und jeder Abscherbolzen einen Teilbereich aufweist, der als der entsprechende erste und zweite Abscherbolzenteilbereich dient.

8. Losbrechhalterungspfosten nach Anspruch 7, wobei der erste und zweite Abscherbolzen jeder umfassen:
eine Abscherschraube, die einen Kopf an einem Ende und ein Gewinde (218) an einem entgegengesetzten Ende aufweist; eine entsprechende Mutter (288), eingreifend in das Gewinde jeder Abscherschraube; und
jede Abscherschraube einen Durchmesser aufweist, der kleiner ist als ein Durchmesser des entsprechenden Gelenkbolzenteilbereichs.

9. Leitplankenanordnung, die mindestens einen Losbrechhalterungspfosten entsprechend einem der vorangegangenen Ansprüche umfasst.

## Revendications

1. Poteau de support à mécanisme de rupture (18, 210) permettant de monter une glissière de sécurité (16) sur celui-ci, faisant partie d'un système de glissière de sécurité d'autoroute (10), comprenant :
un corps allongé comportant une section supérieure (26) incluant une première extrémité supérieure (58) et une première extrémité inférieure (61), et une section inférieure (28) incluant une deuxième extrémité supérieure (63) et une deuxième extrémité inférieure (66), la deuxième extrémité inférieure (66) ayant une configuration lui permettant d'être installée de manière adjacente à une chaussée, et la première extrémité inférieure ayant une première surface sensiblement verticale (38) sur celle-ci et la deuxième extrémité supérieure (63) ayant une deuxième surface sensiblement verticale (53) sur celle-ci ;
des premiers moyens (68) permettant de fixer une glissière de sécurité (16) sur le corps allongé de manière adjacente à la première extrémité supérieure (58) ;
des deuxièmes moyens (29) permettant d'accoupler en rotation les sections supérieure et inférieure (26, 28) et de fixer de manière amovible la section supérieure du corps allongé de manière généralement alignée avec la section inférieure du corps allongé à l'aide d'une section d'axe de pivotement (126, 226) et d'une goupille de cisaillement ayant une section de goupille de cisaillement (128, 223), dans lequel le poteau de support à mécanisme de rupture (18, 210) résiste à un choc frontal avec la glissière de sécurité, et dans lequel un choc avec une extrémité du système de glissière de sécurité d'autoroute (10) tend à faire tourner la section supérieure (26) du corps allongé par rapport à la section inférieure (28) du corps allongé ;
dans lequel
les deuxièmes moyens (29, 211) incluent :
une première plaque (71, 218) ayant une première ouverture ou évidement (78, 253) et une deuxième ouverture (81, 256) au travers de celle-ci, et une troisième surface sensiblement verticale (73) sur celle-ci, une section de la troisième surface sensiblement verticale (73) étant disposée contre une section de la première surface sensiblement verticale (38), et la première plaque (71, 218) étant fixée à la première extrémité inférieure (61) grâce à une soudure ;
une deuxième plaque (83, 221) ayant une troisième ouverture (91, 258) et une quatrième ouverture (93, 252) au travers de celle-ci, et une quatrième surface sensiblement verticale (86) sur celle-ci, une section de la quatrième surface sensiblement verticale (86) étant disposée contre une section de la deuxième surface sensiblement verticale (53), la deuxième plaque (83) étant fixée à la deuxième extrémité supérieure (63) grâce à une soudure, la deuxième plaque (83) étant disposée de manière adjacente à la première plaque (71) de telle sorte que la première ouverture (78) est alignée avec la troisième ouverture (91), et la deuxième ouverture (81) est alignée avec la quatrième ouverture (93) ;
dans lequel la section d'axe de pivotement (126, 226) s'étend au travers des première et troisième ouvertures (78, 253 ; 91, 258), la section supérieure (26) du corps allongé pouvant être amenée à tourner autour de la section d'axe de pivotement par rapport à la section inférieure (28) du corps allongé ;
dans lequel la section de goupille de cisaillement (128, 223) s'étend au travers des deuxième et quatrième ouvertures (81, 256 ; 93, 252), la section de goupille de cisaillement étant conçue pour faire apparaître un cisaillement en réponse à une force pour permettre le mouvement pivotant de la section supérieure (26) par rapport à la section inférieure (28) autour de la section d'axe de pivotement (126, 226), la section d'axe de pivotement et la section de goupille de cisaillement s'étendant dans une direction forte approximativement perpendiculaire aux plaques, dans lequel le poteau de support présente une résistance mécanique élevée dans la direction forte, et il existe une direction faible généralement perpendiculaire à la direction forte, moyennant quoi le poteau de support présente une résistance mécanique faible dans la direction faible ; et
les première et deuxième plaques (71, 218 ; 83, 221) ont chacune un premier bord (79) et un deuxième bord (80), le premier bord (79) étant orienté généralement dans la direction d'un choc attendu dans la direction faible, et le deuxième bord (80) étant orienté généralement dans un sens opposé au premier bord (79), moyennant quoi la première plaque (71) inclut en outre un premier chanfrein (82, 237) disposé entre un bord inférieur de celle-ci et une section inférieure du deuxième bord (80) de celle-ci, et moyennant quoi la deuxième plaque (83) inclut en outre un deuxième chanfrein (96) disposé entre son bord supérieur et une section supérieure de son deuxième bord, à savoir il existe deux chanfreins (96, 82).

2. Poteau de support à mécanisme de rupture (18, 210) selon la revendication 1, comprenant en outre :
une cinquième surface sensiblement verticale (41) sur un côté de la section supérieure (26) opposé au côté ayant la première surface sensiblement verticale (38) ;
une sixième surface sensiblement verticale (56) sur un côté de la section inférieure (28) opposé au côté ayant la deuxième surface sensiblement verticale (53) ;
une troisième plaque (98) ayant une cinquième ouverture ou évidement (106) et des sixièmes ouvertures (108) au travers de celle-ci, et une septième surface sensiblement verticale (101) sur celle-ci, une section de la septième surface sensiblement verticale (101) étant disposée contre la cinquième surface sensiblement verticale (41), et la troisième plaque (98) étant fixée à la première extrémité inférieure (61) à l'aide d'une soudure ;
une quatrième plaque (111) ayant des septième et huitième ouvertures (118, 121) au travers de celle-ci, et une huitième surface sensiblement verticale (113) sur celle-ci, une section de la huitième surface sensiblement verticale (113) étant disposée contre la sixième surface sensiblement verticale (56), la quatrième plaque (111) étant fixée à la deuxième extrémité supérieure (63) grâce à une soudure, la quatrième plaque (111) étant disposée contre la troisième plaque (98), de telle sorte que la cinquième ouverture (106) est alignée avec la septième ouverture (118) et la sixième ouverture (108) est alignée avec la huitième ouverture (121), et une section d'axe de pivotement supplémentaire (126) s'étendant au travers des cinquième et septième ouvertures (106, 118) dans la direction forte ;
une section de goupille de cisaillement supplémentaire (131) s'étendant au travers des sixième et huitième ouvertures (108, 121) dans la direction forte, la section de goupille de cisaillement supplémentaire étant conçue pour faire apparaître un cisaillement en réponse à une force afin de permettre un mouvement pivotant de la section supérieure (26) par rapport à la section inférieure (28) autour de la section d'axe de pivotement (126) ; et
les troisième et quatrième plaques (98, 111) ont chacune un premier bord (79) et un deuxième bord (80), le premier bord étant orienté généralement dans la direction faible et le deuxième bord s'éloignant généralement de la direction faible, moyennant quoi la troisième plaque (98) inclut en outre un troisième chanfrein disposé entre son bord inférieur et une section inférieure de son deuxième bord, et moyennant quoi la quatrième plaque (111) inclut en outre un quatrième chanfrein disposé entre son bord supérieur et une section supérieure de son deuxième bord.

3. Poteau de support à mécanisme de rupture (210) selon la revendication 1 ou 2, dans lequel le premier ou troisième chanfrein (237) est agencé de telle sorte qu'il coupe la première ou cinquième ouverture ou évidement (253) de manière à obtenir une forme semi-cylindrique.

4. Poteau de support à mécanisme de rupture selon l'une quelconque des revendications précédentes, dans lequel les moyens (211) permettant d'accoupler en rotation les sections supérieure et inférieure comprennent un bloc (68) disposé entre la glissière de sécurité et la section supérieure du corps allongé, moyennant quoi le bloc est accouplé à la première extrémité supérieure afin de former un décalage latéral entre la glissière de sécurité et le poteau de support.

5. Poteau de support à mécanisme de rupture selon l'une quelconque des revendications précédentes, dans lequel les sections supérieure et inférieure (26, 28) du au moins un poteau de support comprennent en outre une poutre en I respective ayant une âme, l'âme (36) de la poutre en I de la section supérieure étant généralement alignée avec l'âme (57) de la poutre en I de la section inférieure, les âmes s'étendant généralement perpendiculairement à la glissière de sécurité, et les poutres en I ayant chacune une paire de rebords (33, 48, 31, 46) fixés aux côtés opposés de l'âme respective, un rebord de la section supérieure ayant la première surface sensiblement verticale disposée sur celui-ci et un rebord de la section inférieure ayant la deuxième surface sensiblement verticale disposée sur celui-ci.

6. Poteau de support à mécanisme de rupture selon la revendication 2, dans lequel les première, deuxième, troisième et quatrième plaques (213, 216, 98, 111) comprennent chacune :
une plaque plate ayant un côté interne et un côté externe, les côtés internes des première, deuxième, troisième et quatrième plaques incluent respectivement les troisième, quatrième, septième et huitième surfaces sensiblement verticales respectivement, et le côté externe de la première plaque ayant une section disposée de manière adjacente à une section du côté interne de la deuxième plaque ; et
une section du côté interne de la troisième plaque disposée de manière adjacente à une section du côté externe de la quatrième plaque.

7. Poteau de support à mécanisme de rupture selon la revendication 6, dans lequel :
la première goupille de cisaillement s'étend au travers des première et deuxième plaques et la deuxième goupille de cisaillement s'étend au travers des troisième et quatrième plaques, les première et deuxième goupilles de cisaillement étant alignées de manière généralement coaxiale les unes avec les autres et s'étendant dans la direction forte, et chaque goupille de cisaillement comportant une section qui sert de première et deuxième sections de goupille de cisaillement respectives.

8. Poteau de support à mécanisme de rupture selon la revendication 7, dans lequel les première et deuxième goupilles de cisaillement comprennent chacune :
un boulon de cisaillement ayant une tête à une extrémité et des filetages (278) au niveau d'une extrémité opposée ;
un écrou (288) respectif engagé avec les filetages de chaque boulon de cisaillement ; et
chaque boulon de cisaillement ayant un diamètre inférieur au diamètre des sections d'axe de pivotement respectives.

9. Système de glissière de sécurité comprenant au moins un poteau de support à mécanisme de rupture selon l'une quelconque des revendications précédentes.
